# EUROPEAN PATENT APPLICATION

(11) **EP 2 876 855 A1**
(43) Date of publication of application: **27.05.2015**
(21) Application number: 14192101.5
(22) Date of filing: 06.11.2014
(51) Int. Cl.: H04L 29/06, H04W 12/08

(54) **Mobile wireless access and establishment of virtual private network**

(30) Priority: 26.11.2013 GB 201320799
(71) Applicant: Vodafone IP Licensing Limited, Newbury, Berkshire RG14 2FN (GB)
(72) Inventor: Hardy, Graeme, London, W2 6BY (GB)
(74) Representative: Boult Wade Tennant

(57) **Abstract**

Mobile wireless access unit 10 and method comprising: Wireless transceiver. Mobile network transceiver for connecting to a cellular network. Processor configured to authenticate a digital certificate received by the wireless transceiver from a wireless device 440, connect the mobile wireless access unit 10 to the wireless device 440 through the wireless transceiver, connect the mobile wireless access unit to a server 450 using the mobile network transceiver and establish a virtual private network, VPN, connection between the wireless device 440 and the server 450.

## Description

### Field of the Invention

The present invention relates to a mobile wireless access unit and a method for establishing a secure connection between a server and a wireless device using the mobile wireless access unit.

### Background of the Invention

Mobile Wi-Fi hotspot devices provide Wi-Fi access to the Internet and other services using a mobile telecommunications system backhaul. Therefore, a Wi-Fi enabled device such as a laptop or tablet computer can have access to the Internet in the absence of a fixed line Internet connection usually provided to consumers from a wired Ethernet, cable service, or ADSL line, for example.

Such devices may be known as mobile hotspots or mobile access points. Wireless devices may access such Wi-Fi services using known authentication methods such as WEP or WAP authentication. However, such security measures only protect data confidentiality between the mobile hotspot and wireless device, but does not necessarily provide any security between the mobile hotspot and the mobile base station or beyond into the Internet. This can be problematic where a user wishes to use their mobile device (e.g. cell phone or smart phone) using a mobile Wi-Fi hotspot to connect to a secure server or network such as a corporate domain. Such corporate users may therefore be able to connect wirelessly to their corporate server within a secure or restricted environment such as a company office using a Wi-Fi access point, which is itself hard wired into the corporate server perhaps using an Ethernet backhaul. However, such a user may not be able to have the same level of connectivity or convenience when using a mobile Wi-Fi hotspot outside of the office environment as the corporate server or network cannot rely on the security of a mobile telecommunications backhaul. For example, passwords and user names may be copied or circumvented and may not provide sufficient security to allow the user unrestricted access to the corporate server or network.

Therefore, there is required a system and method that overcomes these problems.

### Summary of the Invention

Against this background and in accordance with a first aspect there is provided a mobile wireless access unit comprising: a wireless transceiver; a mobile network transceiver for connecting to a cellular network or mobile base station; and a processor configured to authenticate a digital certificate received by the wireless transceiver from a wireless device, connect the mobile wireless access unit to the wireless device through the wireless transceiver, connect the mobile wireless access unit to a server using the mobile network transceiver and establish a virtual private network, VPN, connection between the wireless device and the server. Therefore, the mobile wireless access unit uses certificate authentication to identify and authenticate a wireless device and set up a VPN connection between the wireless device and the server, which may be a corporate server or secured network. Digital certification improved security. As digital certification is provided at the mobile wireless access unit this is not required at the server side. The server may be a authentication server, gateway server, corporate server, enterprise server, secure server, network server or secure network server, for example.

Optionally, the mobile wireless access unit may further comprise a memory store arranged to store a comparison digital certificate and wherein the authentication by the processor may include the processor further configured to compare the digital certificate received from the wireless device with the comparison digital certificate. Therefore, the digital certificate may be loaded, refreshed, validated or updated as required.

Preferably, the wireless transceiver may be a IEEE 802.11 transceiver. Wireless transceivers other than those using this Wi-Fi protocol or standard may be used.

Optionally, the mobile network transceiver may be selected from the group consisting of: GSM; HSUPA; UMTS; GPRS; 3G; 4G; Enhanced Data rates for GSM Evolution, EDGE; EGPRS; High Speed Packet Access, HSPA; and HSPA+. Other protocols for an air interface may be used.

Optionally, establishing a VPN connection between the wireless device and the server may further include the processor configured to respond to an authentication request issued by the server. Different types of authentication procedures may be used including for example, PIN, RSA code generation and username and password combinations.

Optionally, the processor may be further configured to request from the wireless device an access code or password.

Preferably, the mobile wireless access unit may further comprise a battery and/or a mains power supply. Other power sources such as USB, power over Ethernet or vehicle power supplies may be used.

Optionally, the mobile wireless access unit may further comprise a Digital Living Network Alliance, DLNA, server. This allows the device to be used to deliver digital or stored content, which may be provided by an internal or external data store such as a network attached storage device, for example.

Optionally, the mobile wireless access unit may further comprise a removable memory interface. This may be used to store or update the digital certificate or digital content.

Optionally, the mobile wireless access unit may further comprising a GPS receiver. This allows the device to determine its location and change its operation depending on location.

Optionally, the processor may be further configured to provide Internet connectivity to wireless devices that do not provide the mobile wireless access unit with an authenticatable digital certificate. This allows different modes of operation such as secure and insecure or use of a private network to provide Internet connectivity and connection to the Internet separate to the private network's restrictions. For example, a user may be provided with an option to use the Internet according to policies, restrictions and monitoring afforded and provided by the server operating within a private or corporate network. Alternatively, the user may be allowed to access the Internet outside of such restrictions and conditions. Such unrestricted or unmonitored access may or may not require payment by the user and so a payment mechanism may be used to implement such an option. For example, a user may connect to their corporate network or server during working hours but use the same wireless device and mobile wireless access unit to connect to the Internet outside of this corporate server or network environment upon credit card (or other) payment outside of work hours.

Optionally, the processor may be further configured to provide the Internet connectivity upon validation of a voucher code received from the wireless device. This may be provided by a reseller or retailer, for example. Such a voucher may be purchased by the user to buy a specific time or data allowance. The same mobile wireless access unit may be used to provide secure access to the server through digital certification.

According to a second aspect, there is provided a system comprising: the mobile wireless access unit described above; a server; and a cellular network or mobile base station. The server may be part of a private or secure network. The system may further include one or more wireless devices connectable to the mobile wireless access unit. The system may include one or more mobile wireless access units and/or one or more servers.

Preferably, the server may be configured to provide the wireless device with the digital certificate. This may be done in advance using different mechanisms such as memory cards or as a signal. A corresponding, matching or identical digital certificate may also be provided to the mobile wireless access unit. A separate server may be used to generate and/or distribute the digital certificates.

Preferably, the server may be further configured to apply a policy to the wireless device restricting the wireless device from accessing the Internet outside of the VPN. Therefore, circumvention of security, monitoring or restrictions may be reduced or eliminated.

Optionally, restricting the wireless device may further comprise providing the user of the wireless device with an option to purchase Internet access outside of the VPN.

According to a third aspect, there is provided a method for establishing a secure connection between a server and a wireless device using a mobile wireless access unit comprising the steps of: wirelessly receiving a digital certificate at the mobile wireless unit from the wireless device; authenticating the digital certificate at the mobile wireless access unit; wirelessly connecting the mobile wireless access unit to the wireless device; connecting the mobile wireless access unit to a server using a cellular network or mobile base station; and establishing a virtual private network, VPN, connection between the wireless device and the server.

According to a further aspect there may be provided a computer program comprising program instructions that, when executed on a computer cause the computer to perform the method described above.

The computer program may be stored on a computer-readable medium or transmitted as a signal.

It should be noted that any feature described above may be used with any particular aspect or embodiment of the invention.

### Brief description of the Figures

The present invention may be put into practice in a number of ways and embodiments will now be described by way of example only and with reference to the accompanying drawings, in which:
FIG. 1 shows three separate perspective views of a mobile wireless access unit, given by way of example only;
FIG. 2 shows a sequence diagram schematically showing interactions between components within a system for providing network access to a user provided as an illustrative example;
FIG. 3 shows a sequence diagram schematically showing further interactions between components within the system of fig. 2;
FIG. 4 shows a sequence diagram showing further interactions between the components of the system of fig. 2;
FIG. 5 shows a sequence diagram showing further interactions between the components of the system of fig. 2;
FIG. 6 shows a schematic diagram of a system for establishing a secure connection between a server and a wireless device using the mobile wireless access unit of fig. 1;
FIG. 7 shows a schematic diagram of a screenshot of an administration page for the device of fig. 1;
FIG. 8 shows a screenshot from a wireless device attempting to gain access to the mobile wireless access unit of fig. 1; and
FIG. 9 shows a further screenshot of the wireless device attempting to gain access to the mobile wireless access unit of fig.1.

It should be noted that the figures are illustrated for simplicity and are not necessarily drawn to scale.

### Detailed description of the preferred embodiments

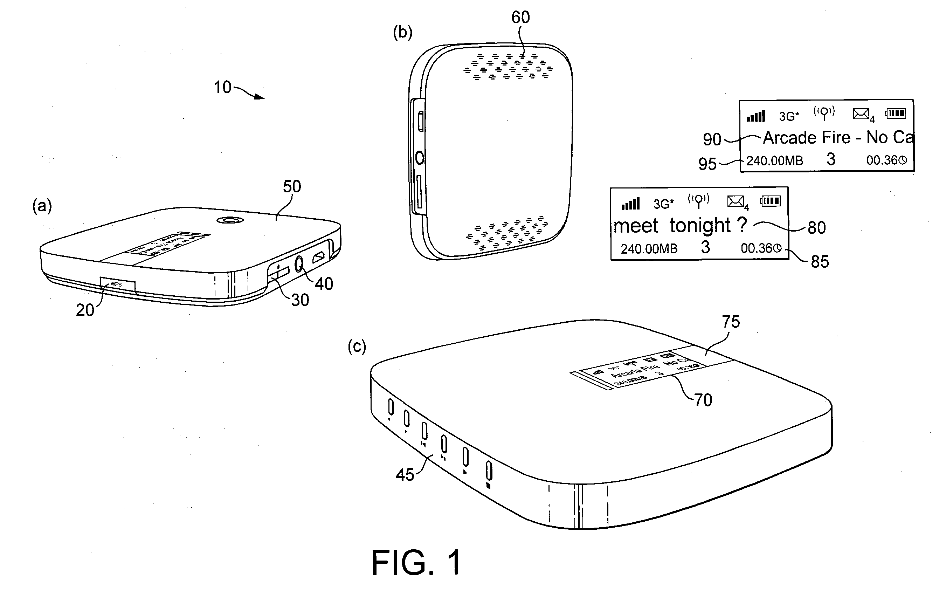

Figure 1 shows three perspective views of a mobile wireless access unit 10. The mobile wireless access unit 10 provides a single self-contained device for providing a connection to the Internet over an air interface to a remote mobile base station and Wi-Fi hotspot functionality. Perspective view (a) shows the mobile wireless access unit 10 placed horizontally. An on-off switch 20 switches power to the unit. A Wi-Fi protected set up (WPS) pushbutton 30 enables pushbutton Wi-Fi connectivity and security setup. A 3.5mm audio out jack 40 is supplied to enable the unit to act as an audio distribution unit. A USB port 50 is also provided to enable additional connectivity to an external storage device or a network attached storage (NAS) device, for example. The mobile wireless access unit 10 has a wireless transceiver (not shown) and one or more antennas, which provides Wi-Fi connectivity and a mobile network transceiver for connecting to a mobile base station or cellular network. The mobile wireless access unit 10 may also contain a processor (not shown in this figure) for carrying out methods or program instructions. The processor may be a Qualcomm 7255 or 8220 for example.

Perspective view (b) shows the mobile wireless access unit 10 placed vertically revealing its underside incorporating one or more speakers 60, which provide audio output. Perspective view (c) illustrates audio navigation buttons 45 and a visual display 70 provided on the top surface of the unit when viewed horizontally. The visual display 70 may be an OLED display or other display technologies, for example.

The visual display 70 may provide various visual indications and information. For example, this may include a SMS ticker 80, an indication of the time connected to a network 85, the name of a particular audio track being played 90 and/or the quantity or rate of data transfer 95.

The features of the mobile wireless access unit 10 relating to audio functionality may or may not be present and are optional features of the device.

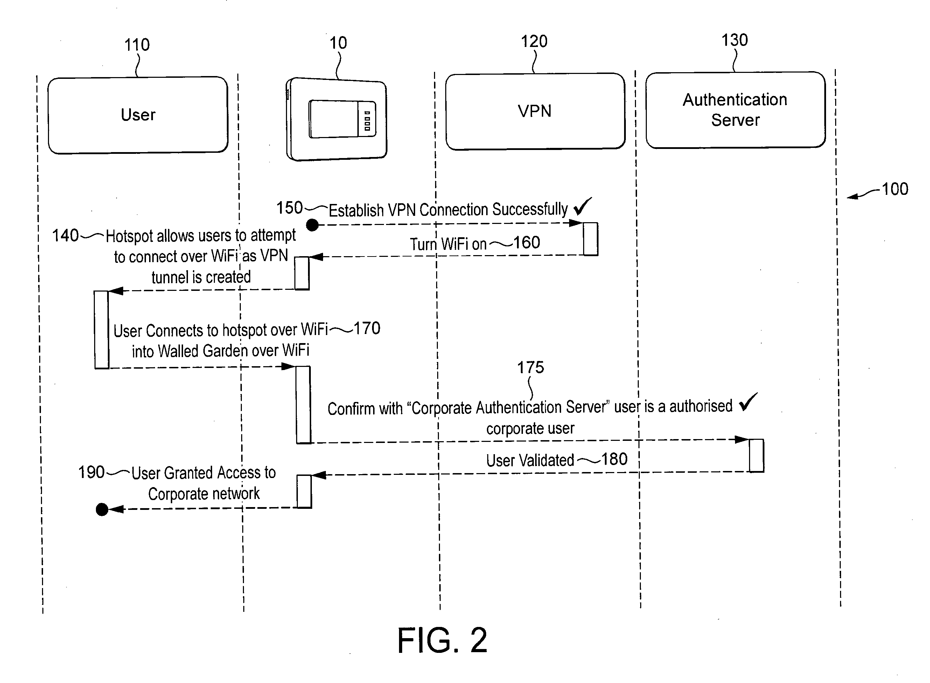

Figure 2 shows a sequence diagram indicating various steps and procedures used in a method 100 to provide access to a user of a wireless device to a server using the mobile wireless access unit 10. The server may be a corporate server, a secure server, a server proving Internet or intranet access or other type of network server, for example. This method 100 is provided as an illustrative example of a procedure for granting such access.

The actors in this sequence diagram are the user 110 (using a wireless device), the mobile wireless access unit 10, a virtual private network (VPN) 120 and an authentication server 130. A VPN is a method or protocol for linking two locations over a public or unsecured network connection as if the two locations were both within a local private network. The method 100 may be initiated from a request originating with the wireless device of the user 110. The first step in the method 100 is to successfully establish a VPN connection 140 between the VPN 120 and the mobile wireless access unit 10. A Wi-Fi transceiver on the mobile wireless access unit 10 or hotspot is then turned on or made available or visible at step 150. The mobile wireless access unit 10 then allows the user 110 to attempt to connect over Wi-Fi as a VPN tunnel is created at step 160.

The user 110 connects to the mobile wireless access unit or hotspot 10 over the Wi-Fi connection into a "walled garden" or secured domain at step 170. A confirmation request is then sent from the mobile wireless access unit 10 through the VPN to the authentication server 130 to confirm that the user 110 is an authorised user at step 175. The authentication server 130 may be part of the server or network that the user wishes to gain access to and the authorisation provided by the authentication server 130 authorises use of the server by the user.

Upon confirmation that the user is an authorised user for the server, a user validation confirmation 180 is sent back to the mobile wireless access unit 10. This allows access to be granted to the server or secure network at step 190.

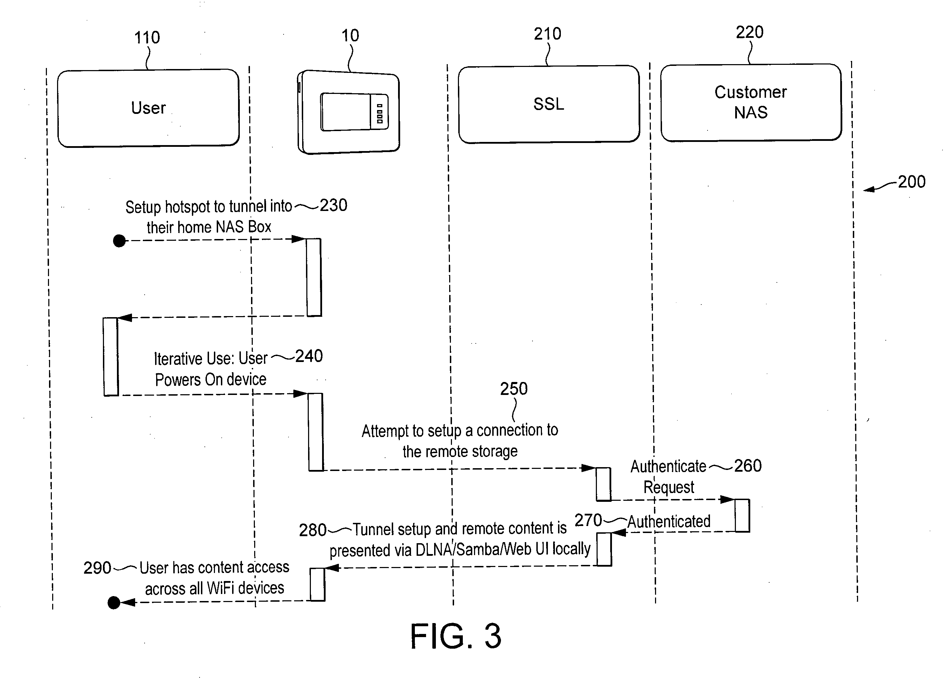

Figure 3 shows a sequence diagram of a method 200 for providing remote access to digital media stored on a network attached storage (NAS) device 220 using the mobile wireless access unit 10 using a secure sockets layer (SSL) 210. This method may be carried out before or after the method 100 described with respect to figure 2. At step 230, the user 110 operating the wireless device attempts to set up the mobile wireless access unit 10 or hotspot to tunnel into a home or other remote NAS device 220. The mobile wireless access unit 10 is powered on by the user at step 240. At step 250, an attempt is made to initiate a connection using SSL 210 security with the remote storage NAS device 220 (other security protocols may be used). The NAS device 220 receives an authentication request at step 260 and authenticates the user at step 270 (or denies access) via the SSL 210 security layer. At step 280, a tunnel is set up and content may be provided via a server interface located on the mobile wireless access unit 10. This server interface may be in the form of a DLNA, SAMBA, or web UI server, for example. The user 110 may be provided with content access across any Wi-Fi connected device at step 290.

The audio functionality of the mobile wireless access device 10 (i.e., speakers 60, 3.5mm audio out port 40, audio controls 45 and track display 90) may be used to play and control content received from the NAS device 220.

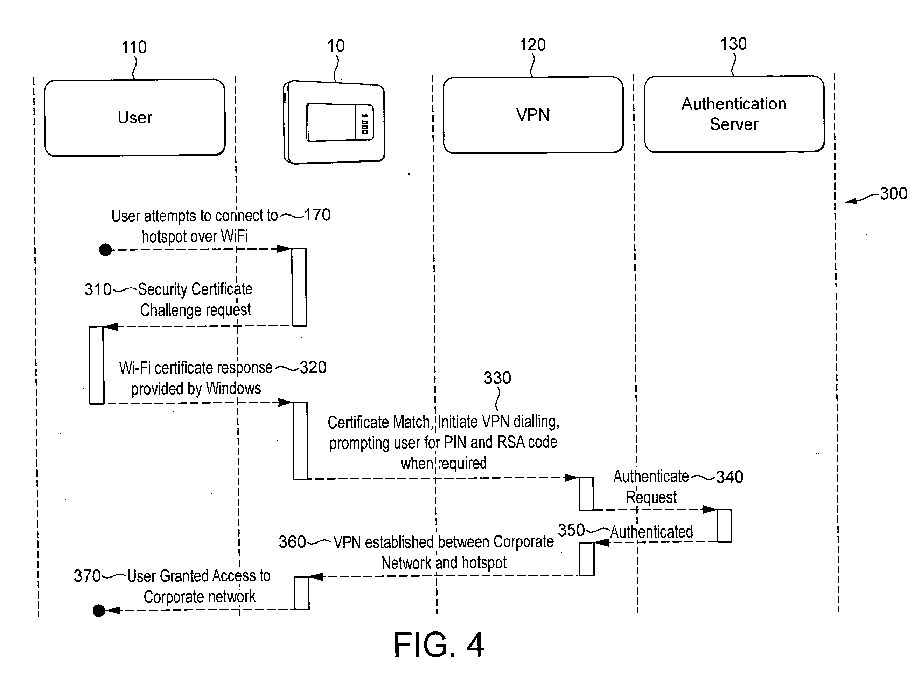

Figure 4 shows a sequence diagram illustrating a method 300 for granting access to the user 110 to a secure or corporate network server (or other type of server). Like steps and actors are provided with the same reference numerals as described with reference to earlier figures. The method 300 described with reference to figure 3 may be performed before or after method 300 or not at all.

The user 110 uses the wireless device to attempt to connect to the hotspot or mobile wireless access unit 10 over the Wi-Fi connection. In response, the mobile wireless access unit 10 issues a security certificate challenge request to the wireless device at step 310. In response, the wireless device of the user 110 may provide a certificate using the Wi-Fi connection at step 320. This may be provided by the wireless device's operating system such as Windows, for example. This response may be provided without user interaction or following user confirmation to transmit or send the digital certificate. At the mobile wireless access unit 10, confirmation (or failure) of a certificate match is carried out and VPN dialling or setup is initiated upon success at step 330. The user may be prompted to supply a PIN number and/or RSA code during this step. Alternatively, the mobile wireless access unit 10 may provide such passwords and codes through the VPN 120 without requiring the user to supply this information as the identity of the user has already been proven by supplying a matched certificate. The user's credentials or other identifier(s) are provided as an authentication request 340 to the authentication server 130. Upon authentication (step 350), a VPN may be established between the server, secure network or corporate network and the mobile wireless access unit 10 at step 360, which results in the mobile wireless access unit 10 granting access to the server or network at step 370.

Connection between the wireless device operated by the user 110 and the mobile wireless access unit 10 may be achieved over a Wi-Fi or IEEE 802.11 protocol. Other wireless connections may be used. Data transfer between the mobile wireless access unit 10 and the authentication server 130 via the VPN 120 may be achieved over the air though a mobile network operator using a mobile base station and operating a suitable protocol such as GSM, 3G, 4G, CDMA, GPRS or EDGE system, for example. Therefore, the mobile wireless access unit 10 may contain similar components to a cellphone or mobile handset including a SIM card and mobile transceiver, for example.

The mobile wireless access unit 10 may be provided with one or more security certificates for a particular organisation or corporation so that any wireless devices with a particular security certificate or matching certificate may be authenticated. The certificate may be set to expire at a certain time. This security certificate may be provided in the factory at the time of manufacture of the mobile wireless access unit 10 later on. The security certificate may be revoked or replaced at intervals or under certain circumstances.

Corresponding security certificates may be provided to the user's wireless device over the air (for example, should the wireless device be a mobile telephone), on a removable memory card or supplied when the device is manufactured or commissioned. When the user's wireless device receives a certificate, certain parameters, policies or configurations may be updated or installed to prevent the wireless device from accessing the Internet or other networks without going through the server, secured network or corporate environment. Therefore, circumvention of any security measures, monitoring or restrictions in place and enforced by the server or corporate network may be reduced or eliminated. Alternatively, the wireless device may not be provided from the factory with such settings, policies and restrictions.

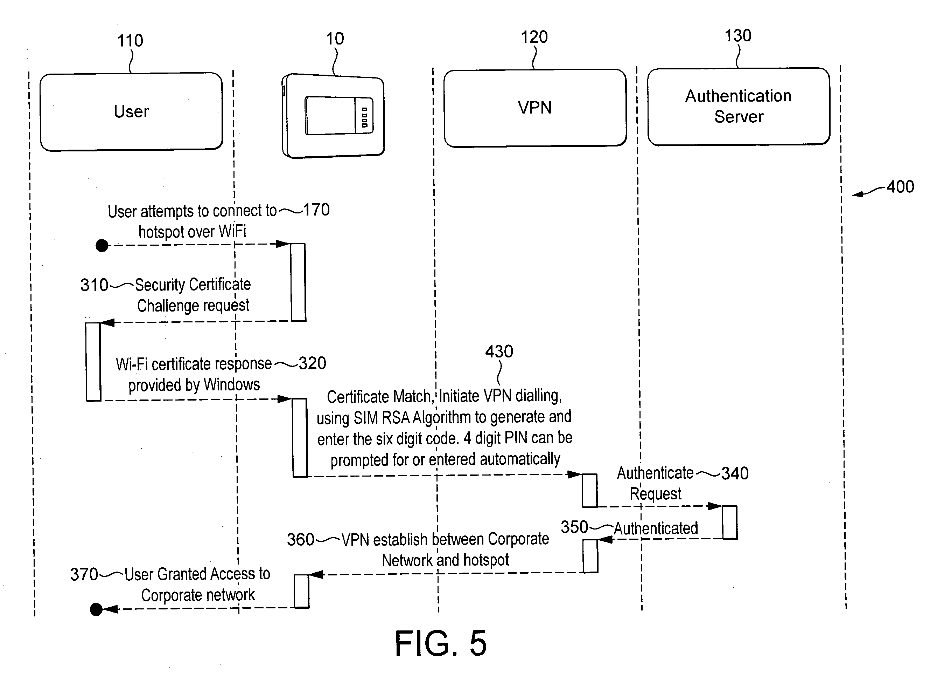

Figure 5 shows a similar sequence diagram to that of figure 4 illustrating a further method 400 for providing access to a server, corporate network and/or the Internet using the mobile wireless access unit 10. Similar method steps to that shown in figure 4 are provided with the same reference numerals.

The difference between the method 300 illustrated in figure 4 and the method illustrated in figure 5 mainly concerns the authentication step following certificate match. Other types of authentication may or may not be used. Following a match, at step 430, VPN dialling is initiated. However, a SIM card within the mobile wireless access unit 10 may be used to perform a RSA cryptographic algorithm to generate a code, which may be six (or other) digits, for example. This generated code together with a PIN (e.g. four or more digits) may be provided manually or automatically through the VPN 120 as an authentication request 340 at the authentication server 130. Following authentication 350, the VPN may be established between the server or corporate network and the mobile wireless access unit 10 at step 360, which in turn provides access over a Wi-Fi connection to the wireless device of the user at step 370.

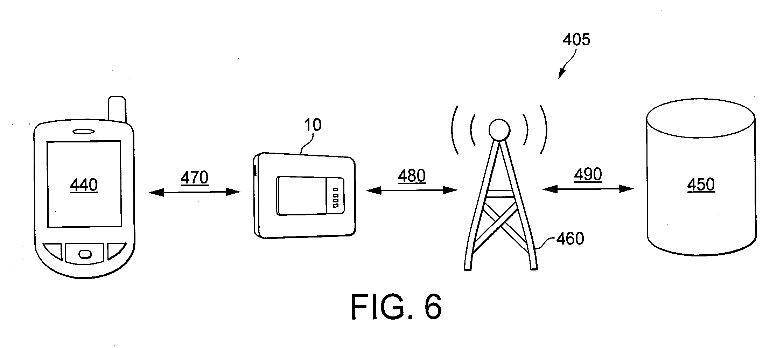

Figure 6 shows a schematic diagram of system 405 including the wireless device 440 connected to the server 450 using the mobile wireless access unit 10 following methods 100, 200, 300 or 400 described with reference to figures 2 to 5. Figure 6 illustrates the wireless or Wi-Fi connection 470 between the wireless device 440 and the mobile wireless access unit 10, which is securely connected to the server 450 across a cellular network including the base station 460 or other node. The mobile wireless access unit 10 connects to the base station 460 through an air interface (uplink/downlink) 480 and the base station 460 is connected to the server through a backhaul 490, which may include the public switched telephone network (PSTN). The mobile wireless access unit 10 administers the VPN 120, Wi-Fi security and certificate checking procedures. More than one wireless device 440 may be connected to the mobile wireless access unit 10 at any one time and the mobile wireless access unit 10 may move to a different base station 460 or cell in a cellular network, especially when moving between locations. One or more mobile wireless access units 10, base stations 460 and or servers 450 may be used with the system 405.

The mobile wireless access unit 10 may also act as a wireless hotspot without any VPN or certificate checking functionality when a wireless device 440 does not require secure access to the server 450. In this case, the mobile wireless access unit 10 provides Wi-Fi Internet access using a cellular backend connection.

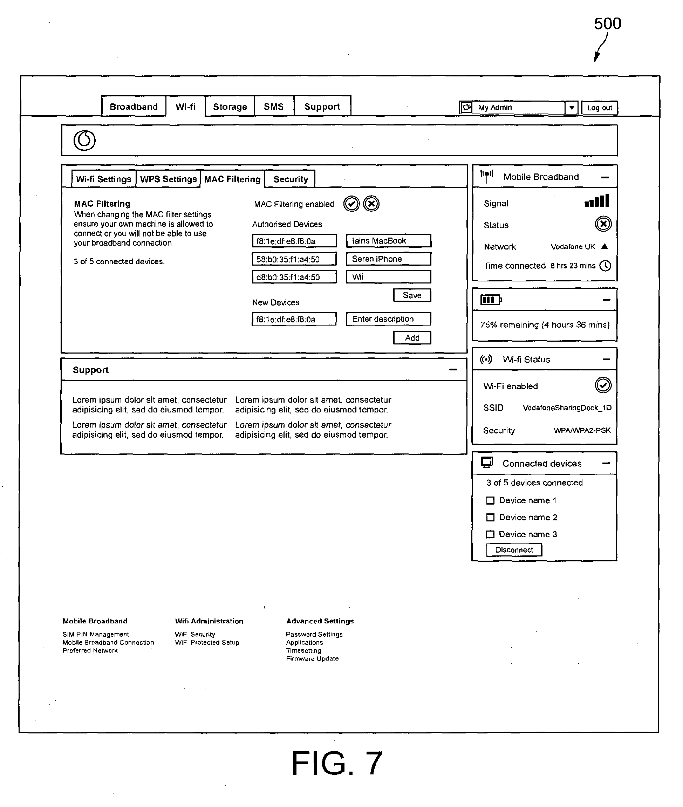

Figure 7 shows a screenshot 500 of an administration or status page indicating the operation of the mobile wireless access unit 10 as viewed from a connected computer or terminal (not shown). On the right hand side of the screenshot 500, the mobile broadband status 510 is indicated in terms of cellular signal strength, connected network and time connected, for example. Below this is an indication of remaining battery power for a battery within the mobile wireless access unit 10. Mains or wired power sources may also be used. The Wi-Fi status 520 may be provided showing whether this is enabled or disabled, its SSID and the particular Wi-Fi security mode in operation. Several devices may be connected by Wi-Fi to the mobile wireless access unit 10 and a list of these devices may be shown below the Wi-Fi status.

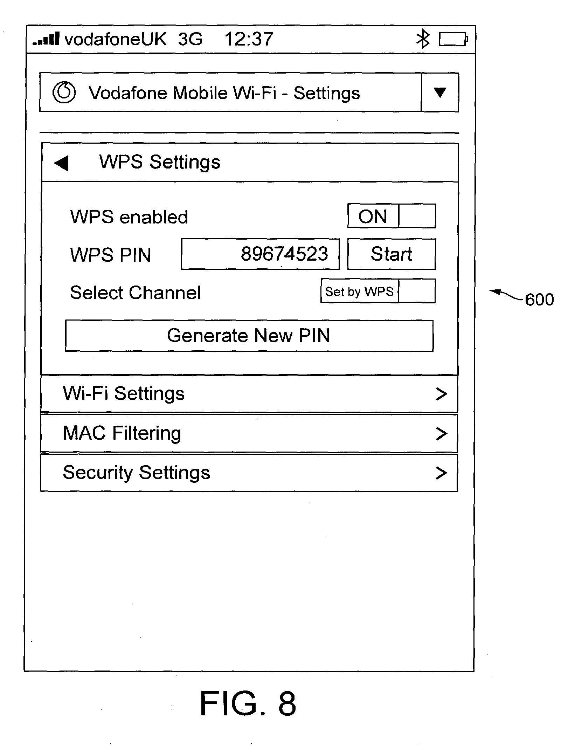

Figure 8 shows a screenshot 600 on a user's wireless device 440. In this example the wireless device 440 is a mobile phone or smart phone. The screenshot shows wireless security settings including the particular WPS PIN being used. However, receipt of a request for a security certificate and provision of this security certificate to the mobile wireless access unit 10 may not indicated in this figure as the certificate may be provided automatically on request.

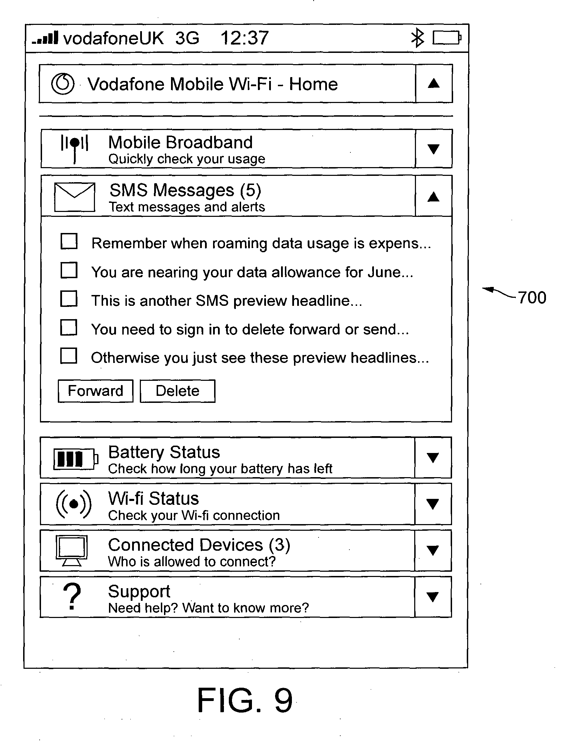

Figure 9 shows a further screenshot 700 from the wireless device 440. This screenshot 700 indicates the status of mobile broadband being provided by the mobile wireless access unit 10 including the number of connected devices, any SMS messages received and broadband usage, for example.

As will be appreciated by the skilled person, details of the above embodiment may be varied without departing from the scope of the present invention, as defined by the appended claims.

For example, the wireless device 440 may be a laptop, computer, cell phone, tablet computer or other portable device. The order of creating the VPN connection to the server, creating the VPN tunnel and connecting wirelessly to a wireless device may be different, reversed or carried out at the same time.

## Claims

1. A mobile wireless access unit comprising:
a wireless transceiver;
a mobile network transceiver for connecting to a cellular network; and
a processor configured to authenticate a digital certificate received by the wireless transceiver from a wireless device, connect the mobile wireless access unit to the wireless device through the wireless transceiver, connect the mobile wireless access unit to a server using the mobile network transceiver and establish a virtual private network, VPN, connection between the wireless device and the server.

2. The mobile wireless access unit of claim 1 further comprising a memory store arranged to store a comparison digital certificate and wherein the authentication by the processor includes the processor further configured to compare the digital certificate received from the wireless device with the comparison digital certificate.

3. The mobile wireless access unit of claim 1 or claim 2, wherein the wireless transceiver is a 802.11 transceiver and
wherein the mobile network transceiver is selected from the group consisting of: GSM; HSUPA; UMTS; GPRS; 3G; 4G; Enhanced Data rates for GSM Evolution, EDGE; EGPRS; High Speed Packet Access, HSPA; and HSPA+.

4. The mobile wireless access unit according to any previous claim, wherein establishing a VPN connection between the wireless device and the server further includes the processor configured to respond to an authentication request issued by the server.

5. The mobile wireless access unit according to any previous claim, wherein the processor is further configured to request from the wireless device an access code or password.

6. The mobile wireless access unit according to any previous claim further comprising a battery and/or a mains power supply.

7. The mobile wireless access unit according to any previous claim further comprising a Digital Living Network Alliance, DLNA, server, a removable memory interface and/or a GPS receiver.

8. The mobile wireless access unit according to any previous claim, wherein the processor is further configured to provide Internet connectivity to wireless devices that do not provide the mobile wireless access unit with an authenticatable digital certificate.

9. The mobile wireless access unit according to claim 11, wherein the processor is further configured to provide the Internet connectivity upon validation of a voucher code received from the wireless device.

10. A system comprising:
the mobile wireless access unit according to any of claim 1-9;
a server; and
a mobile base station.

11. The system of claim 10, wherein the server is configured to provide the wireless device with the digital certificate.

12. The system of claim 11, wherein the server is further configured to apply a policy to the wireless device restricting the wireless device from accessing the Internet outside of the VPN.

13. The system of claim 12, wherein restricting the wireless device further comprises providing the user of the wireless device with an option to purchase Internet access outside of the VPN.

14. A method for establishing a secure connection between a server and a wireless device using a mobile wireless access unit comprising the steps of:
wirelessly receiving a digital certificate at the mobile wireless unit from the wireless device;
authenticating the digital certificate at the mobile wireless access unit;
wirelessly connecting the mobile wireless access unit to the wireless device;
connecting the mobile wireless access unit to a server using a cellular network; and
establishing a virtual private network, VPN, connection between the wireless device and the server.

15. A computer computer-readable medium comprising instructions that, when executed on a computer cause the computer to perform the method claims 14.
